# EUROPÄISCHE PATENTSCHRIFT

(11) **EP 2 758 225 B1**
(45) Veröffentlichungstag und Bekanntmachung des Hinweises auf die Patenterteilung: **07.10.2015**
(21) Anmeldenummer: 12738461.8
(22) Anmeldetag: 25.07.2012
(51) Int. Cl.: B29C 51/16

(54) **ETIKETTIEREINRICHTUNG FÜR EINE THERMOFORMANLAGE UND VERFAHREN**
LABEL APPLYING APPARATUS FOR A THERMOFORM APPARATUS AND METHOD
DISPOSITIF D'ÉTIQUETAGE POUR UN DISPOSITIF DE THERMOFORMAGE ET PROCÉDÉ

(30) Priorität: 20.09.2011 DE 102011083045
(43) Veröffentlichungstag der Anmeldung: 30.07.2014
(73) Patentinhaber: Robert Bosch GmbH, 70442 Stuttgart (DE)
(72) Erfinder: KLOEPPEL, Holger, 63683 Ortenberg (DE); HEIDKAMP, Martin, 63695 Glauburg (DE); WALTER, Peter, 63683 Ortenberg (DE)
(86) Internationale Anmeldenummer: PCT/EP2012/064574
(87) Internationale Veröffentlichungsnummer: WO 2013/041272

(56) Entgegenhaltungen:
- EP-A2- 0 421 641
- DE-A1- 10 011 386
- US-A- 4 332 635
- US-A- 4 787 833
- US-A- 4 853 169
- US-B1- 6 167 935

## Beschreibung

### Stand der Technik

Die Erfindung betrifft eine Etikettiereinrichtung für eine Thermoformanlage nach dem Oberbegriff des Anspruchs 1. Ferner betrifft die Erfindung ein Verfahren zum Betreiben einer erfindungsgemäßen Etikettiereinrichtung.

Eine Etikettiereinrichtung nach dem Oberbegriff des Anspruchs 1 ist aus der US 4,787,833 bekannt. Hierbei werden von einer endlosen Etikettenrolle mittels einer Schneideinrichtung einzelne Etiketten abgetrennt, die an eine als Vakuumsaugband ausgebildete Etikettenzuführeinrichtung übergeben werden. Das (endlose) Vakuumsaugband fördert die Etiketten in den Bereich der Nutzen des Formwerkzeugs, wo sie an die Nutzen übergeben werden. Ein derartiges Vakuumsaugband ist durch die zusätzlichen Einrichtungen zur Erzeugung des Unterdrucks zum Halten der Etiketten an der Oberfläche des Bands relativ aufwändig ausgebildet.

Weitere Etikettiereinrichtungen nach dem Oberbegriff des Anspruchs 1 sind aus dem US 4,853,169 sowie der EP 0 421 641 A2 bekannt. Auch bei diesen Etikettiereinrichtungen findet die Übergabe der von einer Etikettenrolle abgetrennten Etiketten über eine Etikettenzuführeinrichtung statt, die jeweils als Saug band ausgebildet ist.

Eine weitere Etikettiereinrichtung als Bestandteil einer Thermoformanlage ist aus der DE 195 35 033 B4 der Anmelderin bekannt. Bei der bekannten Etikettiereinrichtung wird jedem Nutzen einer Formeinrichtung ein Etikett zugeführt, das von einer dem jeweiligen Nutzen zugeordneten Etikettenrolle abgespult und im Bereich einer trommelförmigen Übergabeeinrichtung für das Etikett in den Nutzen von der Etikettenrolle durch eine Schneideinrichtung abgetrennt wird. Gerade bei Thermoformanlagen, die eine relativ hohe Anzahl von Nutzen, beispielsweise eine Anzahl von mehr als zehn Nutzen aufweisen, ist eine Etikettiereinrichtung gemäß dem Stand der Technik relativ komplex und aufwändig aufgebaut, da sie eine Vielzahl von Schneideinrichtungen und eine Vielzahl von Etikettenzuführungen bzw. Etikettenrollen benötigt. Ferner ist der Platzbedarf durch die vielen Schneideinrichtungen, insbesondere im Bereich der Übergabeeinrichtungen der Etiketten an die Nutzen, relativ hoch. Auch benötigen die ganzen Bevorratungseinrichtungen für die Etikettenrollen einen entsprechenden Aufwand, insbesondere auch das Wechseln der Etikettenrollen.

### Offenbarung der Erfindung

Ausgehend von dem dargestellten Stand der Technik liegt der Erfindung die Aufgabe zugrunde, eine Etikettiereinrichtung für eine Thermoformanlage nach dem Oberbegriff des Anspruchs 1 derart weiterzubilden, dass sie einen relativ einfachen Aufbau aufweist, wobei insbesondere auf die Verwendung von aufwändig gestalteten pneumatisch wirkenden Saugbändem als Etikettenzuführeinrichtung für die abgetrennten Etiketten zu den Nutzen des Formwerkzeugs verzichtet werden soll.

Diese Aufgabe wird bei einer Etikettiereinrichtung für eine Thermoformanlage mit den Merkmalen des Anspruchs 1 erfindungsgemäß dadurch gelöst, dass das Trum des Transportbands senkrecht zur Horizontalen ausgerichtet ist und für jedes Etikett wenigstens einen Mitnahmenocken aufweist, wobei das Transportband eine geringere Höhe aufweist als das Etikett, und wobei das Etikett mit einer Kante im Bereich des Transportbands auf einer Bodenplatte aufliegt. Somit dient das Transportband lediglich der Vorschubbewegung des Etiketts, während sich dieses auf der Bodenplatte aufstützt und auf der Bodenblatte entlanggleitet. Eine derartige Ausbildung der Etikettenzuführeinrichtung ermöglicht den vollständigen Verzicht auf pneumatisch wirkende Halte- bzw. Transportmittel.

Vorteilhafte Weiterbildungen der erfindungsgemäßen Etikettiereinrichtung für eine Thermoformanlage sind in den Unteransprüchen aufgeführt.

In kinematisch für die Etikettiereinrichtung besonders bevorzugter Ausgestaltung der Erfindung wird vorgeschlagen, dass das Formwerkzeug mehrere Längsreihen mit jeweils mehreren Nutzen aufweist, und dass jeder Längsreihe eine separate erste Schneideinrichtung und eine separate Etikettenzuführeinrichtung zugeordnet ist.

Um ein Abtrennen der einzelnen Etiketten von der Etikettenrolle während der Abzugsbewegung der Etiketten an der Etikettenrolle zu ermöglichen, ohne dass hierzu die Etiketten bzw. die Etikettenrollen im Bereich einer Schneideinrichtung gestoppt werden müssen ist es weiterhin vorgesehen, dass die erste Schneideinrichtung als Rotationsschneideinrichtung mit wenigstens einem sich senkrecht zur Längsrichtung der Etiketten erstreckenden Schneidmesser ausgebildet ist.

Da nach dem Fertigen einer bestimmten Anzahl an Behältern die Etiketten einer Etikettenrolle aufgebraucht sind ist es erforderlich, das Ende einer zunächst verwendeten Etikettenrolle mit dem Beginn einer neuen Etikettenrolle zu verbinden. Dies erfolgt üblicherweise mittels Klebebändern. Der mit dem Klebeband versehene Übergangbereich zwischen den letztem Etikett einer (alten) Etikettenrolle und den Etiketten der neuen Etikettenrolle ist nicht zur Verwendung in den Nutzen vorgesehen. Um diesen Zwischenbereich besonders einfach ausscheiden zu können ist es daher vorgesehen, dass zwischen der ersten Schneideinrichtung und der Etikettenzuführeinrichtung eine Klebestellenausscheideeinrichtung angeordnet ist.

Um eine relativ hohe Leistung bei relativ einfachem Aufbau der Etikettenzuführeinrichtung zu ermöglichen, ist es in einer besonders bevorzugten Ausgestaltung der Etikettenzuführeinrichtung vorgesehen, dass diese als endlos umlaufendes, Transportband, vorzugsweise in Form eines Zahnriemenbandes, ausgebildet ist.

Besonders bevorzugt ist es bei der zuletzt genannten Ausgestaltung des Transportbands vorgesehen, dass dem Transportband im Bereich der Nutzen jeweils ein Weichenelement zugeordnet ist, mittels dem ein mit dem Transportband gefördertes Etikett von dem Transportband an die vorzugsweise trommelförmige Übergabeeinrichtung geleitet wird, und dass das Weichenelement in einer Achse schwenkbar gelagert ist.

Um die Anzahl der verwendeten Etikettenrollen auch bei einer relativ hohen Anzahl von Nutzen des Formwerkzeugs relativ gering zu halten, kann es darüber hinaus vorgesehen sein, dass eine zweite Schneideinrichtung vorgesehen ist, die in Längsrichtung der Etikettenrolle angeordnetes Schneidmesser umfasst, das die Etikettenrolle in wenigstens zwei Etikettenbandabschnitte trennt, dass die zweite Schneideinrichtung in Förderrichtung der Etiketten vor der ersten Schneideinrichtung angeordnet ist, und dass die Etikettenbandabschnitte jeweils einer Längsreihe von Nutzen zugeordnet sind.

Die Erfindung umfasst auch ein Verfahren zum Betreiben einer erfindungsgemäßen Etikettiereinrichtung. Hierbei ist es vorgesehen, dass während des Formvorgangs der Behälter in den Nutzen des Formwerkzeugs wenigstens ein Etikett einer einem Nutzen zugeordneten Übergabeeinrichtung zugeführt wird, und dass die Etiketten den Nutzen mittels der Übergabeeinrichtungen gleichzeitig zugeführt werden. Dadurch wird zum einen eine relativ hohe Leistung der Thermoformanlage ermöglicht, und darüber hinaus kann für die in der Regel mehreren Übergabeeinrichtungen ein gemeinsamer Antrieb verwendet werden, so dass sich der Aufwand zum Antreiben der Übergabeeinrichtungen reduzieren lässt.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine stark vereinfachte Darstellung einer erfindungsgemäßen Etikettiereinrichtung für eine Thermoformanlage in einer Draufsicht
- Fig. 2: einen Schnitt durch die Etikettiereinrichtung gemäß Fig. 1 im Bereich einer Übergabeeinrichtung für ein Etikett von einer Etikettenzuführeinrichtung an eine trommelförmige Übergabeeinrichtung und
- Fig. 3: einen Abschnitt einer Etikettenrollen mit Etiketten in Draufsicht.

Gleiche Bauteile bzw. Bauteile mit gleicher Funktion sind in den Figuren mit den gleichen Bezugsziffern versehen.

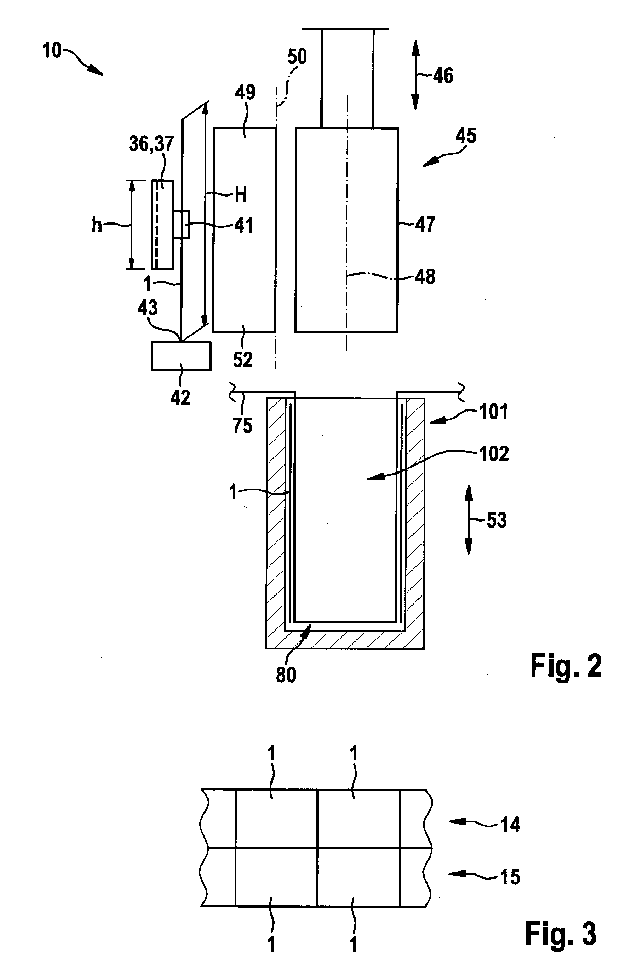

In den Figuren ist eine erfindungsgemäße Etikettiereinrichtung 10 dargestellt, wie sie als Bestandteil einer Thermoformanlage 100 dient. Mittels der Thermoformanlage 100 werden lediglich in der Fig. 2 dargestellte, becherförmige Behälter 80 aus einer thermoverformbaren Materialbahn 75 hergestellt, an deren Außenseite bzw. Außenwand jeweils wenigstens ein Etikett 1 aufgebracht ist.

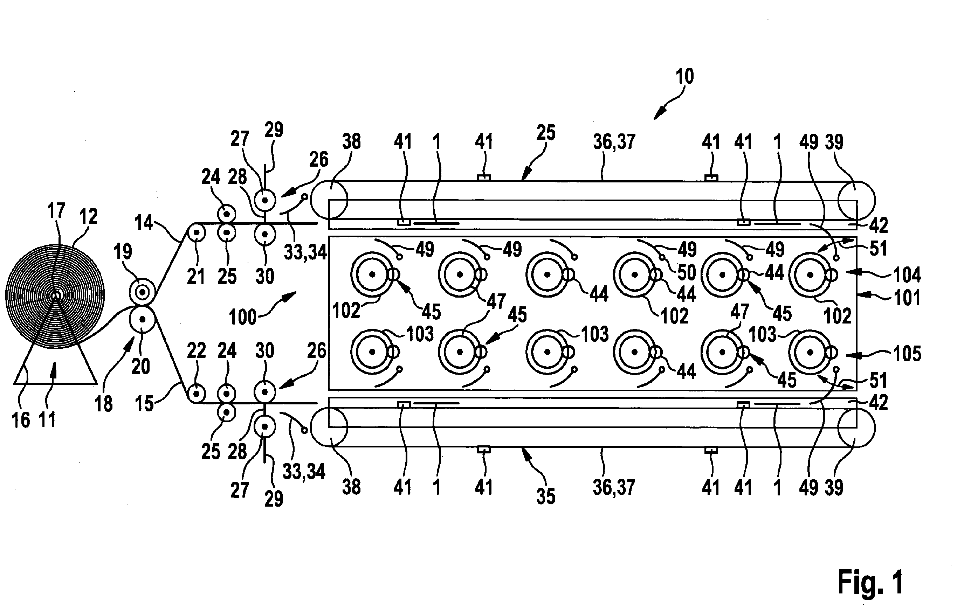

Beim Etikettieren von Behältern 80 in Thermoformanlagen 100 unterscheidet man grundsätzlich zwei Arten des Etikettierens: Bei der ersten Art wird das betreffende Etikett 1 erst nach dem Formen des Behälters 80 und Herausnahme des Behälters aus einem der Formung des Behälters 80 dienenden Nutzen auf die erstarrte Außenwand des Behälters 80 aufgebracht. Bei der zweiten Art, die bei einer Thermoformanlage 100 mit einer erfindungsgemäßen Etikettiereinrichtung 10 Verwendung findet, spricht man von einer sogenannten "Inmold-Etikettierung". Bei dieser Etikettierungsart werden die Etiketten 1 bereits vor dem Formen der Behälter 80 in ein Formwerkzeug 101 der Thermoformanlage 100 eingebracht. Hierzu weist das Formwerkzeug 101, das in der Fig. 1 lediglich stark vereinfacht dargestellt ist, für jeden der Behälter 80 einen Nutzen 102, 103 auf, in die eine endlose, thermoverformbare Materialbahn 75, die zuvor erwärmt wurde, mittels entsprechender Stempelwerkzeuge oder mittels Unter- oder Überdruck eingebracht wird. Dabei legt sich der entsprechende Abschnitt der erwärmten und verformten Materialbahn 75 an das Etikett 1 an. Nach dem Erstarren der Materialbahn 75 werden die Behälter 80 zusammen mit dem Etikett 1 aus den Nutzen 102, 103 ausgeformt. Eine derartige Thermoformanlage 100, die im Übrigen nicht Bestandteil dieser Erfindung ist, ist an sich bekannt und wird daher nicht näher beschrieben.

Das Formwerkzeug 101 weist im Ausführungsbeispiel jeweils sechs Nutzen 102 und sechs Nutzen 103 auf, die jeweils auf einer Geraden angeordnet sind und somit eine Längsreihe 104 bzw. 105 ausbilden. Das Formwerkzeug 101 umfasst somit insgesamt zwölf Nutzen 102, 103, wobei die Behälter 80 in den Nutzen 102, 103 jeweils alle gleichzeitig ausgeformt bzw. gebildet werden.

Ergänzend wird erwähnt, dass es selbstverständlich auch im Rahmen der Erfindung liegt, eine Thermoformanlage 100 derart auszubilden, dass lediglich eine der Längsreihen 104, 105, oder aber mehr als zwei Längsreihen 104, 105 vorgesehen sind. Weiterhin ist es selbstverständlich ebenso denkbar, dass jede der Längsreihen 104, 105 mehr oder weniger als sechs Nutzen 102, 103 aufweist.

Die Etikettiereinrichtung 10 umfasst eine Bevorratungseinrichtung 11, in deren Bereich die Etiketten 1 in Form einer Etikettenrolle 12 bevorratet sind. Auf der Etikettenrolle 12 sind die einzelnen Etiketten 1 jeweils direkt aneinander anschließend ohne Trägerpapier o.ä. in zwei übereinander angeordneten Etikettenbandabschnitten 14, 15 angeordnet, wie dies in der Fig. 3 dargestellt ist. Hierbei ist die der Behälterwand zugewandte Rückseite der Etiketten 1 bevorzugt wenigstens bereichsweise mit einem Heißsiegel- bzw. Heißschmelzkleber beschichtet. Die Bevorratungseinrichtung 11 für die Etikettenrolle 12 umfasst beispielhaft eine Trägereinrichtung 16, auf der die Etikettenrolle 12 in einer Achse 17 gelagert ist.

Die Etiketten 1 werden von der Etikettenrolle 12 mittels nicht dargestellter, insbesondere als Reibrollen ausgebildeter Abzugsrollen, zwischen denen die Etikettenrolle 12 geführt ist, von der Bevorratungseinrichtung 11 vorzugsweise kontinuierlich abgezogen und einer Längsschneideinrichtung 18 zugeführt, die ein Längsschneidmesser 19 aufweist, das mit einer Gegenrolle 20 zusammenwirkt. Die Etikettenrolle 12 wird dabei zwischen dem Längsschneidmesser 19 und der Gegenrolle 20 hindurchgeführt, wobei durch das Längsschneidmesser 19 die beiden angesprochenen, jeweils Etiketten 1 aufweisenden Etikettenbandabschnitte 14, 15 gebildet werden. Die beiden Etikettenbandabschnitte 14, 15 werden anschließend jeweils beispielhaft mittels einer Umlenkrolle 21, 22 und zweier miteinander zusammenwirkender, kontinuierlich angetriebener Vorschubrollen 24, 25 einer Querschneideinrichtung 26 für die Etiketten 1 zugeführt.

Die Querschneideinrichtung 26 ist als Rotationsschneidemesser 27 mit zwei, um 180° zueinander versetzt angeordneten Querschneiden 28, 29 ausgebildet, die mit einer Gegenrolle 30 zusammenwirken. Mittels der Querschneideinrichtung 26 werden von den jeweiligen Etikettenbandabschnitten 14, 15 die jeweils direkt einander anschließenden Etiketten 1 abgetrennt, wobei die Querschneiden 28, 29 der Rotationsschneidemesser 27 senkrecht zur Förderrichtung der Etikettenbandabschnitte 14, 15 im Bereich der Querschneideinrichtung 26 bzw. senkrecht zur Längsrichtung der Etiketten 1 ausgerichtet sind.

An die Querschneideinrichtung 26 schließt sich eine Klebestellenausscheideeinrichtung 33 mit einer in den Förderweg der Etiketten 1 einschwenkbaren Ausschleusweiche 34 an, mittels der nicht zur Verwendung in den Nutzen 102, 103 vorgesehene Übergangsbereiche zwischen zwei Etikettenrollen 12, die beim Austausch einer Etikettenrolle 12 gebildet werden, ausgeschieden werden.

Die von den Etikettenbandabschnitten 14, 15 vereinzelten Etiketten 1 gelangen nach dem Abtrennen durch die Querschnitteinrichtung 26 jeweils in eine Etikettenzuführeinrichtung 35, die die Etiketten 1 den einzelnen Nutzen 102 bzw. 103 des Formwerkzeugs 101 zuführt. Die Etikettenzuführeinrichtung 35 umfasst ein vorzugsweise kontinuierlich angetriebenes Transportband 36, das als Zahnriemenband ausgebildet ist. Das Trum 37 des Transportbands 36 läuft um zwei Umlenkrollen 38, 39, wobei wenigstens eine der Umlenkrollen 38, 39 angetrieben ist. Wie insbesondere aus einer Zusammenschau der Fig. 1 und 2 erkennbar ist, ist das Trum 37 vertikal zur Horizontalen ausgerichtet und weist an seiner Außenseite in gleichmäßigen Abständen zueinander angeordnete Mitnahmenocken 41 für die Etiketten 1 auf. Wie ferner anhand der Fig. 2 erkennbar ist, ist die Höhe h des Trums 37 geringer als die Höhe H eines Etiketts 1, wobei das Trum 37 vorzugsweise entsprechend der Fig. 2 in etwa mittig ausgerichtet zum Etikett 1 angeordnet ist. Im Bereich der Etikettenzuführeinrichtung 35 bzw. des Transportbands 36 ist ferner eine Bodenplatte 42 angeordnet, auf der die Etiketten 1 während ihres Transports durch die Mitnahmenocken 41 des Transportbands 36 mit einer unteren (Längs-) Kante 43 aufliegen und entlang gleiten.

In Ausrichtung mit den Nutzen 102, 103 des Formwerkzeugs 101 ist jedem der Nutzen 102, 103 eine Übergabeeinrichtung 45 für ein Etikett 1 von der Etikettenzuführeinrichtung 35 an den jeweiligen Nutzen 102, 103 zugeordnet. Die Übergabeeinrichtung 45 umfasst entsprechend der Fig.2 eine in Richtung des Doppelpfeils 46 auf- und abbewegbare Transporttrommel 47, die mit einer schaltbaren Gegenrolle 49 zusammenwirkt. Die vorzugsweise mittels eines gemeinsamen Antriebs miteinander verbundenen Transporttrommeln 47 sind dabei zwischen einer ersten, angehobenen Stellung, in der sich die Transporttrommeln 47 in Höhe des Transportbands 36 befinden, und einer abgesenkten Position, in der die Etiketten 1 in die Nutzen 102, 103 eintauchen, bewegbar. Die Transporttrommeln 47 weisen bevorzugt Saugöffnungen an ihren Außenwänden auf, die mit einer nicht dargestellten Unterdruckquelle verbunden sind. Mittels der Transporttrommel 47 kann jeweils ein Etikett 1 von dem Transportband 36 übernommen werden, wobei dieses durch eine entsprechende Drehung der Transporttrommel 47 um seine Längsachse 48 das entsprechende Etikett 1 übernimmt und anschließend, in der in den Nutzen 102, 103 abgesenkten Position beispielsweise durch Abschalten des Unterdrucks an die Wand des Nutzens 102, 103 abgibt und dort positioniert.

Ergänzend wird erwähnt, dass die Übergabeeinrichtung 45 in Abhängigkeit von der Form der Nutzen 102, 103 bzw. der Form der Behälter 80 auch anders als beschrieben ausgebildet sein kann. So sind aus dem Stand der Technik beispielsweise Übergabeeinrichtungen 45 bekannt, bei denen zwei konzentrisch zueinander angeordnete, dornartige Hülsen vorgesehen sind, wobei in der äußeren Hülse ein Schlitz ausgebildet ist. Die Etiketten 1 können kann über den Schlitz in den (ringförmigen) Innenraum zwischen den beiden Hülsen eingeführt werden, wo sie mit Unterdruck an der Löcher aufweisenden) Wand der inneren Hülse gehalten bzw. positioniert werden. Anschließend kann die innere Hülse in den Bereich der Nutzen 102, 103 verfahren werden, während die äußere Hülse an ihrem Ort verbleibt.

Jeder der Transporttrommeln 47 ist ferner ein Weichenelement 49 zugeordnet, das in einer Achse 50 in Richtung des Doppelpfeils 51 mittels nicht dargestellter Antriebe individuell schwenkbar angeordnet ist. Das Weichenelement 49 dient dem Ausschleusen eines Etiketts 1 von dem Transportband 36 an die Transporttrommel 47, wozu das Weichenelement 49 ein entsprechend geformtes Blech 52 aufweist, das ein von dem Transportband 36 ausgeschleustes Etikett 1 direkt an die Transporttrommel 47 weiterleitet, wo dieses durch den angesprochenen Unterdruck von der Transporttrommel 47 bei gleichzeitiger Drehung um seine Längsachse 48 übernommen wird.

Die soweit beschriebene Etikettiereinrichtung 10 arbeitet wie folgt: Nach dem Ausbilden der beiden Etikettenbandabschnitte 14, 15 durch die Längsschneideeinrichtung 18 werden die beiden Etikettenbandabschnitte 14, 15 synchron den Querschneideinrichtungen 26 zugeführt, die zum Vereinzeln der Etiketten 1 aus den Etikettenbandabschnitten 14, 15 dienen. Anschließend werden die vereinzelten Etiketten 1 über die Mitnahmenocken 41 von dem Transportband 36 übernommen und in Richtung der einzelnen Nutzen 102, 103 transportiert. Das Ausschleusen der einzelnen Etiketten 1 im Bereich der Nutzen 102, 103 erfolgt durch die Weichenelemente 49, die jeweils in den Förderweg der Etiketten 1 eingeschwenkt werden. Wesentlich dabei ist, dass bei den sechs aufeinanderfolgenden Etiketten 1 einer Längsreihe 104, 105 die einzelnen Weichenelemente 49 jeweils nur einmal angesteuert werden, so dass jeweils nur ein Etikett 1 einem Nutzen 102 bzw. 103 zugeführt wird. Nach dem Aktivieren der Weichenelemente 49 gelangen die Etiketten 1, wie bereits erläutert, in den Bereich der Transporttrommeln 47, wo das jeweilige Etikett 1 am Umfang der Transporttrommel 47 aufgewickelt wird. Anschließend werden die Transporttrommeln 47 gemeinsam in die Nutzen 102, 103 des Thermoformwerkzeugs 101 eingetaucht und an diese übergeben. Danach werden die Transporttrommeln 47 wieder in ihre ursprüngliche, angehobene Position verfahren, um für den nächsten Fertigungstakt die erforderlichen Etiketten 1 zu übernehmen. Nach dem Austauchen aus den Nutzen 102, 103 kann die erwärmte Materialbahn 75 in Überdeckung mit den Nutzen 102, 103 gebracht werden, um die Behälter 80 durch Thermoformung auszubilden. Zur Beschleunigung der Übergabe der Etiketten 1 an die Nutzen 102, 103 sowie dem einfacheren Handling der Materialbahn 75 kann es vorgesehen sein, dass das Formwerkzeug 101 in Richtung des Doppelpfeils 53 heb- und senkbar angeordnet ist.

Die soweit beschriebene Etikettiereinrichtung 10 kann in vielfältiger Art und Weise abgewandelt bzw. modifiziert werden, ohne vom Erfindungsgedanken abzuweichen. Dieser besteht in der Verwendung einer gemeinsamen Querschneideeinrichtung 26 für mehrere Nutzen 102, 103 einer Thermoformanlage 100 und einer Etikettenzuführeinrichtung 35, die die vereinzelten Etiketten 1 den jeweiligen Nutzen 102, 103 zuführt.

## Patentansprüche

1. Etikettiereinrichtung (10) für eine Thermoformanlage (100), mit einer Bevorratungseinrichtung (11) für wenigstens eine Etikettenrolle (12), die eine Vielzahl von Etiketten (1) aufweist, einer ersten Schneideinrichtung (26) zum Abtrennen jeweils eines Etiketts (1) von der wenigstens einen Etikettenrolle (12), einer Übergabeeinrichtung (45) zum Überführen jeweils eines von der wenigstens einen Etikettenrolle (12) abgetrennten Etiketts (1) in einen Nutzen (102, 103) eines Formwerkzeugs (101) zum Herstellen eines Behälters (80), wobei das Formwerkzeug (101) mehrere Nutzen (102, 103) aufweist, wobei durch das Formwerkzeug (101) in einem Herstelltakt jeweils alle Behälter (80) in den Nutzen (102, 102) herstellbar sind, wobei die erste Schneideinrichtung (26) mehreren Nutzen (102, 103) des Formwerkzeugs (101) zugeordnet ist, wobei eine Etikettenzuführeinrichtung (35) vorgesehen ist, die die jeweils durch die erste Schneideinrichtung (26) von der wenigstens einen Etikettenrolle (12) abgetrennten Etiketten (1) den Übergabeeinrichtungen (45) der Nutzen (102, 103) zuführt, und wobei die Etikettenzuführeinrichtung (35) als endlos umlaufendes Transportband (36), ausgebildet ist,
**dadurch gekennzeichnet,**
**dass** das Trum (37) des Transportbands (36) senkrecht zur Horizontalen ausgerichtet ist und für jedes Etikett (1) wenigstens einen Mitnahmenocken (41) aufweist, dass das Transportband (36) eine geringere Höhe (h) aufweist als das Etikett (1), und dass das Etikett (1) mit einer Kante (43) im Bereich des Transportbands (36) auf einer Bodenplatte (42) aufliegt.

2. Etikettiereinrichtung nach Anspruch 1,
**dadurch gekennzeichnet,**
**dass** das Formwerkzeug (101) mehrere Längsreihen (104, 105) mit jeweils mehreren Nutzen (102, 103) aufweist, und dass jeder Längsreihe (104, 105) eine separate erste Schneideinrichtung (26) und eine separate Etikettenzuführeinrichtung (35) zugeordnet ist.

3. Etikettiereinrichtung nach Anspruch 1 oder 2,
**dadurch gekennzeichnet,**
**dass** die erste Schneideinrichtung (26) als Rotationsschneideinrichtung (27) mit wenigstens einem sich senkrecht zur Längsrichtung der Etiketten (1) ersteckenden Schneidmesser (28, 29) ausgebildet ist.

4. Etikettiereinrichtung nach einem der Ansprüche 1 bis 3,
**dadurch gekennzeichnet,**
**dass** zwischen der ersten Schneideinrichtung (26) und der Etikettenzuführeinrichtung (35) eine Klebestellenausscheideeinrichtung (33) angeordnet ist.

5. Etikettiereinrichtung nach Anspruch 1,
**dadurch gekennzeichnet,**
**dass** dem Transportband (36) im Bereich der Nutzen (102, 103) jeweils ein Weichenelement (49) zugeordnet ist, mittels dem ein auf dem Transportband (36) gefördertes Etikett (1) von dem Transportband (36) an die Übergabeeinrichtung (45) geleitet wird, und dass das Weichenelement (49) in einer Achse (49) schwenkbar gelagert ist.

6. Etikettiereinrichtung nach einem der Ansprüche 1 bis 5,
**dadurch gekennzeichnet,**
**dass** eine zweite Schneideinrichtung (18) vorgesehen ist, die in Längsrichtung der Etikettenrolle (12) angeordnetes Schneidmesser (19) umfasst, das die Etikettenrolle (12) in wenigstens zwei Etikettenbandabschnitte (14, 15) trennt, dass die zweite Schneideinrichtung (18) in Förderrichtung der Etiketten (1) vor der ersten Schneideinrichtung (26) angeordnet ist, und dass die Etikettenbandabschnitte (14, 15) jeweils einer Längsreihe (104, 105) von Nutzen (102, 103) zugeordnet sind.

7. Etikettiereinrichtung nach einem der Ansprüche 1 bis 6,
**dadurch gekennzeichnet,**
**dass** die Übergabeeinrichtung (45) trommelförmig ausgebildet ist.

8. Etikettiereinrichtung nach einem der Ansprüche 1 bis 7,
**dadurch gekennzeichnet,**
**dass** das Transportband (36) in Form eines Zahnriemenbandes ausgebildet ist.

9. Verfahren zum Betreiben einer Etikettiereinrichtung (10) nach einem der Ansprüche 1 bis 8,
wobei
während des Formvorgangs der Behälter (80) in den Nutzen (102, 103) des Formwerkzeugs (101) wenigstens ein Etikett (1) einer einem Nutzen (102, 103) zugeordneten Übergabeeinrichtung (45) zugeführt wird, und dass die Etiketten (1) den Nutzen (102, 103) mittels der Übergabeeinrichtungen (45) gleichzeitig zugeführt werden.

10. Verfahren nach Anspruch 9,
**dadurch gekennzeichnet,**
**dass** die Etikettenzuführeinrichtung (35) kontinuierlich betrieben wird, und dass zum Ausschleusen eines Etiketts (1) von der Etikettenzuführeinrichtung (35) ein Weichelement (49) in den Förderweg des Etiketts (1) eingeschwenkt wird.

## Claims

1. Labelling unit (10) for a thermoforming system (100), having a storage unit (11) for at least one label roll (12) which has a multiplicity of labels (1), a first cutting unit (26) for severing in each case one label (1) from the at least one label roll (12), a transfer unit (45) for transferring in each case one label (1) which has been severed from the at least one label roll (12) to a moulding compartment (102, 103) of a mould (101) for producing a container (80), wherein the mould (101) has a plurality of moulding compartments (102, 103), wherein in each case all containers (80) are producible in the moulding compartments (102, 103) by the mould (101) in one production cycle, wherein the first cutting unit (26) is assigned to a plurality of moulding compartments (102, 103) of the mould (101), wherein a label infeed unit (35) which infeeds the labels (1) which have been in each case severed by the first cutting unit (26) from the at least one label roll (12) to the transfer units (45) of the moulding compartments (102, 103) is provided, and wherein the label infeed unit (35) is configured as an infinitely revolving conveyor belt (36),
**characterized**
**in that** the lead (37) of the conveyor belt (36) is oriented so as to be perpendicular to the horizontal and has at least one dog (41) for each label (1), in that the conveyor belt (36) has a smaller height (h) than the label (1), and in that the label (1) by way of an edge (43) in the region of the conveyor belt (36) bears on a base plate (42).

2. Labelling unit according to Claim 1,
**characterized**
**in that** the mould (101) has a plurality of longitudinal rows (104, 105) having in each case a plurality of moulding compartments (102, 103), and in that each longitudinal row (104, 105) is assigned one separate first cutting unit (26) and one separate label infeed unit (35).

3. Labelling unit according to Claim 1 or 2,
**characterized**
**in that** the first cutting unit (26) is configured as a rotary cutting unit (27) having at least one cutting blade (28, 29) which extends so as to be perpendicular to the longitudinal direction of the labels (1).

4. Labelling unit according to one of Claims 1 to 3,
**characterized**
**in that** a bonding-area exclusion unit (33) is disposed between the first cutting unit (26) and the label infeed device (35).

5. Labelling unit according to Claim 1,
**characterized**
**in that** the conveyor belt (36) in the region of the moulding compartments (102, 103) is assigned in each case one turnout element (49) by means of which a label (1) which is conveyed on the conveyor belt (36) is directed from the conveyor belt (36) to the transfer unit (45), and in that the turnout element (49) is pivotably mounted in an axle 49.

6. Labelling unit according to one of Claims 1 to 5,
**characterized**
**in that** a second cutting unit (18) which comprises a cutting blade (19) which is disposed in the longitudinal direction of the label roll (12) and which separates the label roll (12) into at least two label-tape portions (14, 15) is provided, in that the second cutting unit (18) in the conveying direction of the labels (1) is disposed ahead of the first cutting unit (26), and in that the label-tape portions (14, 15) are in each case assigned to one longitudinal row (104, 105) of moulding compartments (102, 103).

7. Labelling unit according to one of Claims 1 to 6,
**characterized**
**in that** the transfer unit (45) is configured so as to be drum-shaped.

8. Labelling unit according to one of Claims 1 to 7,
**characterized**
**in that** the conveyor belt (36) is configured in the form of a timing belt.

9. Method for operating a labelling unit (10) according to one of Claims 1 to 8,
wherein
during the forming operation of the containers (80) in the moulding compartments (102, 103) of the mould (101) at least one label (1) is infed to a transfer unit (45) which is assigned to one moulding compartment (102, 103), and wherein the labels (1) are simultaneously infed to the moulding compartments (102, 103) by means of the transfer units (45).

10. Method according to Claim 9,
**characterized**
**in that** the label infeed unit (35) is continuously operated, and in that for discharging a label (1) from the label infeed unit (35) a turnout element (49) is pivoted into the conveying path of the label (1).

## Revendications

1. Dispositif d'étiquetage (10) pour une installation de thermoformage (100), comprenant un dispositif de stockage (11) pour au moins un rouleau d'étiquettes (12) qui présente une pluralité d'étiquettes (1), un premier dispositif de coupe (26) pour séparer à chaque fois une étiquette (1) de l'au moins un rouleau d'étiquettes (12), un dispositif de transfert (45) pour transférer à chaque fois une étiquette (1) séparée de l'au moins un rouleau d'étiquettes (12) dans un flan (102, 103) d'un outil de formage (101) pour fabriquer un récipient (80), l'outil de formage (101) présentant plusieurs flans (102, 103), tous les récipients (80) dans les flans (102, 103) pouvant être fabriqués en une seule étape de fabrication par l'outil de formage (101), le premier dispositif de coupe (26) étant associé à plusieurs flans (102, 103) de l'outil de formage (101), un dispositif d'alimentation en étiquettes (35) étant prévu, lequel achemine les étiquettes (1) à chaque fois séparées de l'au moins un rouleau d'étiquettes (12) par le premier dispositif de coupe (26) aux dispositifs de transfert (45) des flans (102, 103), et le dispositif d'alimentation en étiquettes (35) étant réalisé sous forme de bande transporteuse en circulation sans fin (36),
**caractérisé en ce que**
le tronçon (37) de la bande transporteuse (36) est orienté perpendiculairement à l'horizontale et, pour chaque étiquette (1), présente au moins une came d'entraînement (41), **en ce que** la bande transporteuse (36) présente une plus faible hauteur (h) que l'étiquette (1), et **en ce que** l'étiquette (1) repose avec une arête (43) dans la région de la bande transporteuse (36) sur une plaque de fond (42).

2. Dispositif d'étiquetage selon la revendication 1,
**caractérisé en ce que**
l'outil de formage (101) présente plusieurs rangées longitudinales (104, 105) avec à chaque fois plusieurs flans (102, 103), et **en ce que** chaque rangée longitudinale (104, 105) est associée à un premier dispositif de coupe séparé (26) et à un dispositif d'alimentation en étiquettes séparé (35).

3. Dispositif d'étiquetage selon la revendication 1 ou 2,
**caractérisé en ce que**
le premier dispositif de coupe (26) est réalisé sous forme de dispositif de coupe rotatif (27) avec au moins une lame de coupe (28, 29) s'étendant perpendiculairement par rapport à la direction longitudinale des étiquettes (1).

4. Dispositif d'étiquetage selon l'une quelconque des revendications 1 à 3,
**caractérisé en ce**
**qu'**un dispositif d'enlèvement de colle (33) est disposé entre le premier dispositif de coupe (26) et le dispositif d'alimentation en étiquettes (35).

5. Dispositif d'étiquetage selon la revendication 1,
**caractérisé en ce**
**qu'**un élément d'aiguillage (49) est à chaque fois associé à la bande transporteuse (36) dans la région des flans (102, 103), au moyen duquel une étiquette (1) transportée sur la bande transporteuse (36) est guidée depuis la bande transporteuse (36) au dispositif de transfert (45), et en ce que l'élément d'aiguillage (49) est supporté de manière pivotante dans un axe (49).

6. Dispositif d'étiquetage selon l'une quelconque des revendications 1 à 5,
**caractérisé en ce**
**qu'**il est prévu un deuxième dispositif de coupe (18) qui comprend une lame de coupe (19) disposée dans la direction longitudinale du rouleau d'étiquettes (12), qui sépare le rouleau d'étiquettes (12) en au moins deux sections de bande d'étiquettes (14, 15), en ce que le deuxième dispositif de coupe (18) est disposé dans la direction de transport des étiquettes (1) avant le premier dispositif de coupe (26), et en ce que les sections de bande d'étiquettes (14, 15) sont associées à chaque fois à une rangée longitudinale (104, 105) de flans (102, 103).

7. Dispositif d'étiquetage selon l'une quelconque des revendications 1 à 6,
**caractérisé en ce que**
le dispositif de transfert (45) est réalisé en forme de tambour.

8. Dispositif d'étiquetage selon l'une quelconque des revendications 1 à 7,
**caractérisé en ce que**
la bande transporteuse (36) est réalisée sous la forme d'une bande à courroie dentée.

9. Procédé pour faire fonctionner un dispositif d'étiquetage (10) selon l'une quelconque des revendications 1 à 8,
dans lequel, pendant l'opération de formage des récipients (80) dans les flans (102, 103) de l'outil de formage (101), au moins une étiquette (1) est acheminée à un dispositif de transfert (45) associé à un flan (102, 103), et dans lequel les étiquettes (1) sont acheminées simultanément aux flans (102, 103) au moyen des dispositifs de transfert (45).

10. Procédé selon la revendication 9,
**caractérisé en ce que**
le dispositif d'alimentation en étiquettes (35) est entraîné en continu, et **en ce que** pour l'expulsion d'une étiquette (1) du dispositif d'alimentation en étiquettes (35), un élément d'aiguillage (49) est pivoté dans la voie de transport de l'étiquette (1).
